# EUROPEAN PATENT SPECIFICATION

(11) **EP 3 202 629 B1**
(45) Date of publication and mention of the grant of the patent: **03.10.2018**
(21) Application number: 17154494.3
(22) Date of filing: 02.02.2017
(51) Int. Cl.: B60T 13/16

(54) **DISTRIBUTOR AND OLEODYNAMIC BRAKING SYSTEM OF AN AGRICULTURAL OR FORESTRY VEHICLE**
VERTEILER UND HYDRAULISCHE BREMSANLAGE EINES LANDWIRTSCHAFT- ODER FORSTFAHRZEUGS
DISTRIBUTEUR ET SYSTEME DE FREINAGE HYDRAULIQUE D'UN VEHICULE AGRICOLE OU FORESTIER

(30) Priority: 02.02.2016 IT UB20160348
(43) Date of publication of application: 09.08.2017
(73) Proprietor: Slanzi Oleodinamica S.r.l., 42017 Novellara (IT)
(72) Inventor: GIOVANETTI, Gian Pietro, 42017 NOVELLARA (IT)
(74) Representative: Cataldi, Giulia

(56) References cited:
- EP-A1- 0 400 432
- DE-A1- 3 737 579
- FR-A1- 2 521 935
- US-B1- 7 959 173

## Description

The present invention relates to a hydraulic distributor and system for braking an agricultural or forestry vehicle.

In particular, the present invention finds advantageous application in a hydraulic braking distributor and system which complies with the new EU Regulation 167/2013 concerning the requirements relating to the braking of vehicles for the purpose of type-approval of agricultural and forestry vehicles (hereinafter regulations) relating to the braking of towed vehicles.

This regulation requires, inter alia, that an agricultural and forestry vehicle provide a main line run through by high-pressure oil and a secondary line run through by low-pressure oil, which are separated from each other so that one line can ensure the braking of the towed vehicle even in case of malfunction of the other.

The above-mentioned regulation also requires very precise specifications related to the timing and mode of braking of the towed vehicle in case of failure.

### PRIOR ART

Hydraulic distributors for agricultural or forestry vehicle braking circuits for sending fluid under pressure to towed vehicles are known, for example, from EP0400432, however these types of distributors are controlled by means of a single pressure line.

### DESCRIPTION OF THE INVENTION

The object of the present invention is to provide a hydraulic distributor and system for braking an agricultural or forestry vehicle, which complies with the requirements of the above-mentioned regulation.

In particular, the object of the present invention is to provide a hydraulic distributor and system which includes a main line and a secondary line separated from each other (as provided for by the regulation) and an automatic system for the actuation of an emergency braking system in case of detection of malfunctions on a line.

According to the present invention, a braking hydraulic distributor and system is provided as set forth in the appended claims.

### BRIEF DESCRIPTION OF THE DRAWINGS

The invention will now be described with reference to the accompanying drawings, which illustrate non-limiting embodiments thereof, in which:
- Figure 1 shows a main view and a top view of a distributor 1 according to the present invention;
- Figure 2 is a view in the direction of the arrow II in Figure 1;
- Figure 3 is a section along the line III-III in Figure 1;
- Figure 4 is a section along the line IV-IV in Figure 2;
- Figure 5 is a section along the line V-V in Figure 2;
- Figure 6 is an operating diagram of the hydraulic distributor 1 of Figure 1 in a first operational configuration;
- Figure 7 is an operating diagram of the hydraulic distributor 1 of Figure 1 in a second operational configuration;
- Figure 8 is an operating diagram of the hydraulic distributor 1 of Figure 1 in a third operational configuration;
- Figure 9 is a diagram of a first embodiment of a hydraulic system 2 comprising a hydraulic distributor 1 according to the present invention; and
- Figure 10 is a diagram of a second embodiment of a hydraulic system 2 comprising a hydraulic distributor 1 according to the present invention.

### PREFERRED EMBODIMENTS OF THE INVENTION

In the figures, the numeral 1 indicates, as a whole, a hydraulic distributor for braking an agricultural or forestry vehicle (of known type and not shown), in particular for braking a towed vehicle (of known type and not shown) connected to the agricultural or forestry vehicle.

The distributor 1 is a component of a hydraulic system 2 for braking the tractor. In particular, the hydraulic system 2 is configured, as will be discussed in more detail below, to send high-pressure oil to the towed vehicle along a main line LI and low-pressure oil along an additional line LII. In particular, the system 2 comprises, in a known manner, a main delivery PI of high-pressure oil, an additional delivery PII of low-pressure oil and an outlet T. The main delivery PI is configured for feeding the main line LI with oil at a pressure of up to about 150 bar. The additional delivery PII is configured for feeding the additional line LII with oil at a pressure of up to about 30 bar.

The distributor 1 comprises a body 3 inside which chambers and ducts for the passage of oil and the housing of valves are provided, as will be illustrated.

In particular, the distributor 1 comprises a main brake valve 4 arranged along the main line LI for sending, in use, high-pressure oil to the towed vehicle, and an additional brake valve 5 arranged along the additional line LII for sending, in use, low-pressure oil to the towed vehicle.

The distributor 1 further comprises a main drive 6 and a pilot valve 7. The main drive 6 is configured to actuate the main brake valve 4 through the pilot valve 7.

The distributor 1 also comprises an additional drive 8 that is configured to actuate the additional brake valve 5 in the case of faults during the braking process.

Advantageously, the distributor 1 comprises a signal line LS which connects the pilot valve 7 to the additional drive 8 (as will be explained in greater detail below) in such a way as to actuate the additional brake valve 5 in the event that the oil pressure along the main line LI drops below a predetermined safety value.

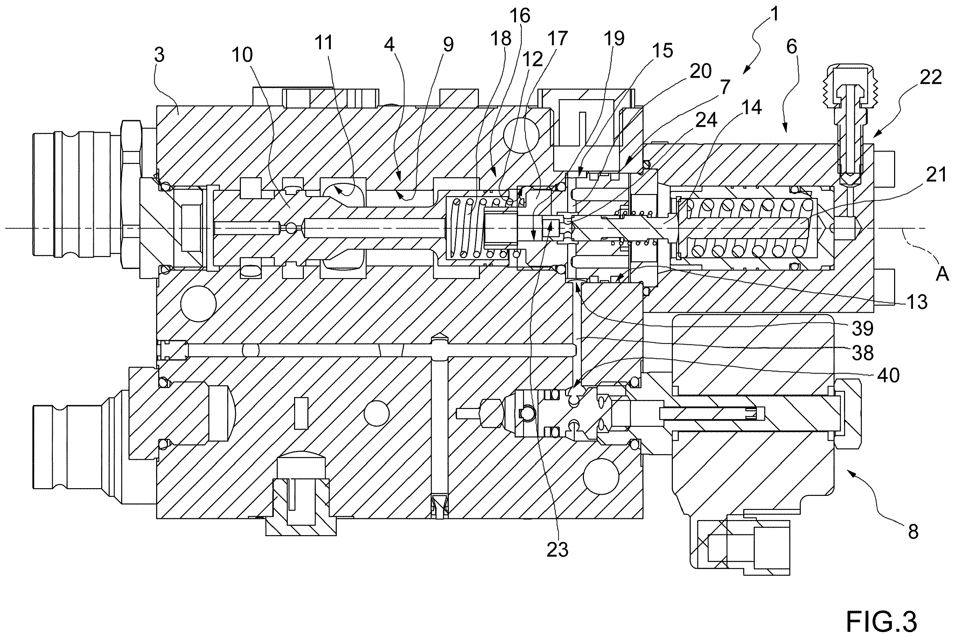

As shown in Figure 3, the distributor 1 has a main delivery chamber 9 having a longitudinal axis A. The distributor 1 also comprises a main delivery spool 10. The main delivery chamber 9 is configured to form, together with the main delivery spool 10, the brake valve 4.

In particular, it is noted that hereinafter the term spool is intended to mean an, at least partially hollow, cylindrical body which serves as a shutter for a respective valve.

Advantageously, the main delivery chamber 9 has a main delivery inlet 11 for high-pressure oil, supplied by the main delivery PI, and a main delivery outlet 12 for sending, in a known manner, high-pressure oil to a towed vehicle connected to the agricultural or forestry vehicle.

Advantageously, the main brake valve 4 comprises a main delivery spool 10 that is coaxial with the longitudinal axis A and is mounted to slide axially inside the main delivery chamber 9. The main brake valve 4 is a slide valve. Advantageously, the main brake valve 4 is a two-way, three-position valve.

The distributor 1 also has a main controlling chamber 13 and comprises a main pilot spool 14, which is configured to define the pilot valve 7 together with the main controlling chamber 13 itself. As shown in Figure 3, the main controlling chamber 13 is coaxial with the main delivery chamber 9, and the main pilot spool 14 is coaxial with the longitudinal axis A and is mounted to slide axially inside the main controlling chamber 13. The main controlling chamber 13 has a draining outlet 15 that can be connected (in a known manner) to the outlet T of the hydraulic system 2.

The pilot valve 7 also comprises calibration means 16 which are configured to act axially upon the main delivery spool 10 and are configured to stop, in use, the main delivery spool 10 in a predetermined working position along the longitudinal axis A when the resistant pressure of the high-pressure oil, to which the main delivery spool 10 is subjected, exceeds a predetermined value. In particular, the calibration means 16, in turn, comprise a support 17, which is fixed with respect to the body 3 of the distributor, and elastic return means 18. As shown in Figure 3, the elastic return means of the calibration means 16 are defined by a spring.

Advantageously, the support 17 is a cylindrical body housed inside the main controlling chamber 13 and axially fixed with respect to the longitudinal axis A. The support 17 has an inner cylindrical cavity 19 coaxial with the axis of feed and adapted to accommodate the main pilot spool 14, which is axially movably mounted inside said inner cavity 19.

Advantageously, the support 17 has an outlet duct 20 which passes diametrically through the support 17 itself and puts in communication the inner cavity 19 with the draining outlet 15.

The main pilot spool 14 is movably mounted inside the inner cavity 19. The main pilot spool 14, in turn, has an inner cavity 23 which is in fluid communication with the main delivery chamber 9. The main pilot spool 14 also has two lateral openings 24 diametrically opposed to each other and opposite to the inner cavity 23. The lateral openings 24 are adapted to put in communication the inner cavity 23 of the main pilot spool 14 with the outlet duct 20. Advantageously, when the main pilot spool 14 is in an emergency position S the lateral openings 24 are aligned with the outlet duct 20, and the main delivery chamber 9 is in communication with the outlet T through the inner cavity 23 of the main pilot spool 14 itself.

The pilot valve 7 is a slide valve. Advantageously, the pilot valve 7 is a two-way, three-position valve. In particular, the pilot valve has a rest position R, a working position L and the emergency position S, as will be explained in greater detail below.

As shown in Figure 3, the main drive 6 is a drive of known type, shown schematically, comprising a main brake piston 21 which is coaxial with the longitudinal axis A and is mounted to slide axially along said longitudinal axis A. The main drive 6 comprises a main brake actuator 22 (in the example shown, a hydraulic actuator) which can be operated in a known manner directly by an operator. The main brake actuator 22 can be selected from a group of different actuators adapted to move the main brake piston 21 axially as a result of an impulse given by an operator. Alternatively, according to variants of known type and not illustrated, the main brake actuator 22 may be an equivalent of an electrical and/or mechanical type actuator.

As shown in Figure 3, the main pilot spool 14 is axially interposed between the brake piston 21 and the main delivery spool 10. In particular, the main pilot spool 14 is configured to transfer to the main delivery spool 10 axial movements imparted by the brake piston 21, as will be explained in greater detail below.

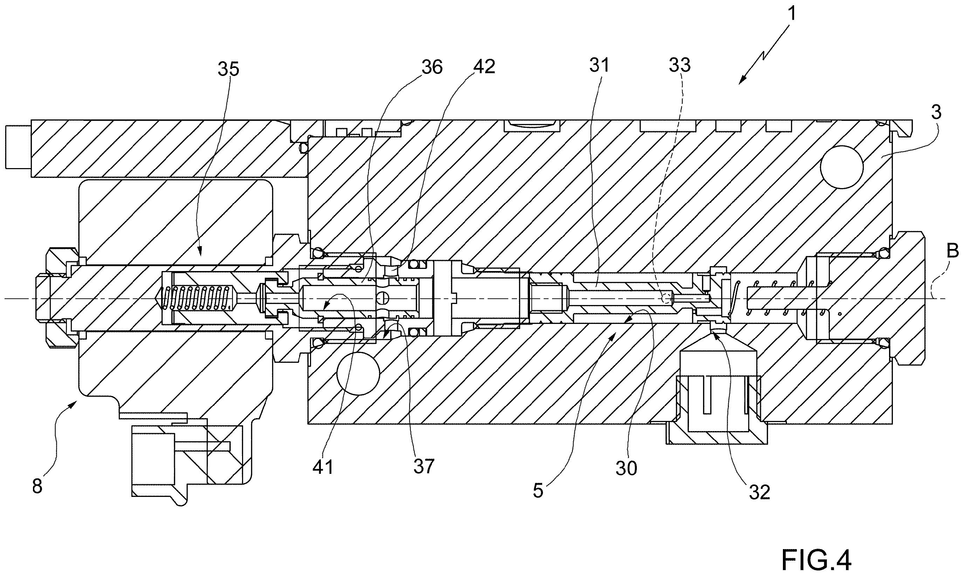

As shown in Figure 4, the distributor 1 has an additional delivery chamber 30 having a longitudinal axis B. The distributor 1 also comprises an additional delivery spool 31. The additional delivery chamber 30 is configured to form, together with the additional delivery spool 31, the additional brake valve 5.

Advantageously, the additional delivery chamber 30 has an additional inlet 32 for low-pressure oil, supplied by the additional delivery PII, and an additional delivery outlet 33 (dashed and not in view in Figure 4) for sending, in a known manner, low-pressure oil to the towed vehicle connected to the agricultural or forestry vehicle. The additional brake valve 5 is a slide valve. Advantageously, the additional brake valve 5 is a two-way, two-position valve.

As shown in Figure 4, the additional drive 8 comprises an additional actuator 35 (in the example shown, a solenoid valve) which can be operated in a known manner directly by an operator.

The additional drive 8 also comprises an additional pilot spool 36 mounted to slide axially inside an additional controlling chamber 37, which is coaxial and in communication with the additional delivery chamber 30. The additional pilot spool 36, by moving axially along the additional delivery chamber 36, can selectively vary the position of the additional delivery spool 31, as will be explained in greater detail below.

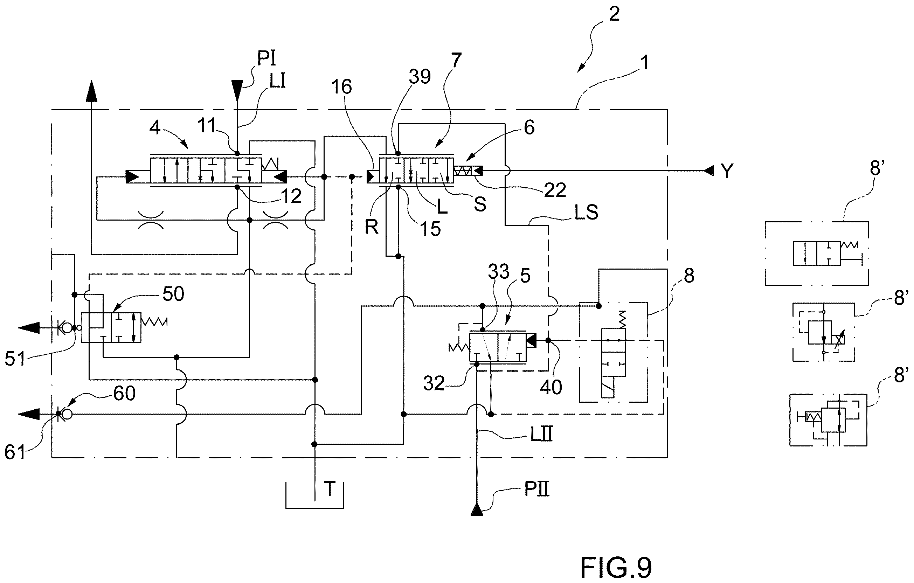

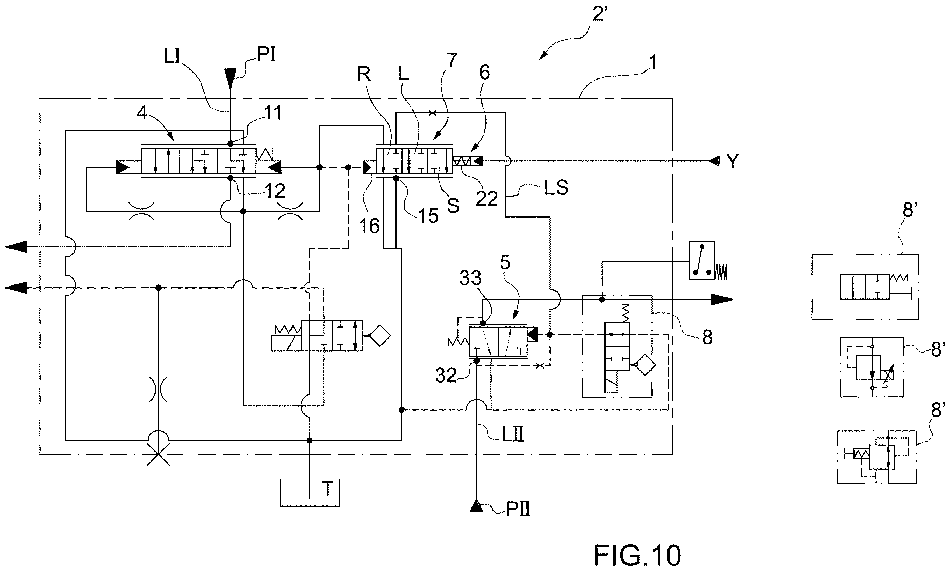

Advantageously, the additional drive 8 can be coupled to the body 3 of the distributor in a releasable manner so that it can be replaced with either an additional spare drive 8 or an additional drive 8 of a different type, which can be interchangeable, for example, with an additional drive 8' comprising an additional, different actuator 35'. Advantageously, the additional drive 8 can be selected from a group of alternative additional drives 8'. Alternatively, as shown in Figures 9 and 10, the additional actuator 35' can be a mechanical valve or a proportional solenoid valve or a proportional mechanical valve. Advantageously, when the additional actuator 35' is a proportional solenoid valve, a modulation of the emergency braking is obtained for speeds of the towed vehicle exceeding 40 km/h. Advantageously, when the additional actuator 35' is a proportional mechanical valve, a modulation of the emergency braking is obtained for speeds of the towed vehicle exceeding 40 km/h.

The additional pilot spool 36 is configured to connect the outlet T with the additional delivery chamber 30 when it is placed in an emergency braking position.

Advantageously, as shown in Figure 3, the distributor 1 comprises a signal duct 38 which connects the main controlling chamber 13 with the additional controlling chamber 37. As shown in Figure 3, the signal duct 38 faces the interior of the main controlling chamber 13 through a main signal opening 39. The signal duct 38 faces the interior of the additional controlling chamber 37 through an additional signal opening 40.

As shown in Figure 4, the additional pilot spool 36 has an inner cavity 41 in fluid communication with the additional delivery chamber 30. Advantageously, the additional pilot spool 36 has a lateral opening 42 which puts in communication the inner cavity 41 with the outside. When the additional pilot spool 30 is in the emergency braking position, the lateral opening 42 is aligned with the additional signal opening 40 and puts in communication, through the inner cavity 41, the additional delivery chamber 30 with the signal duct 38. Therefore, the additional delivery chamber 30 can be put in communication with the outlet T through the signal duct 38 depending on the position of the additional pilot spool 36.

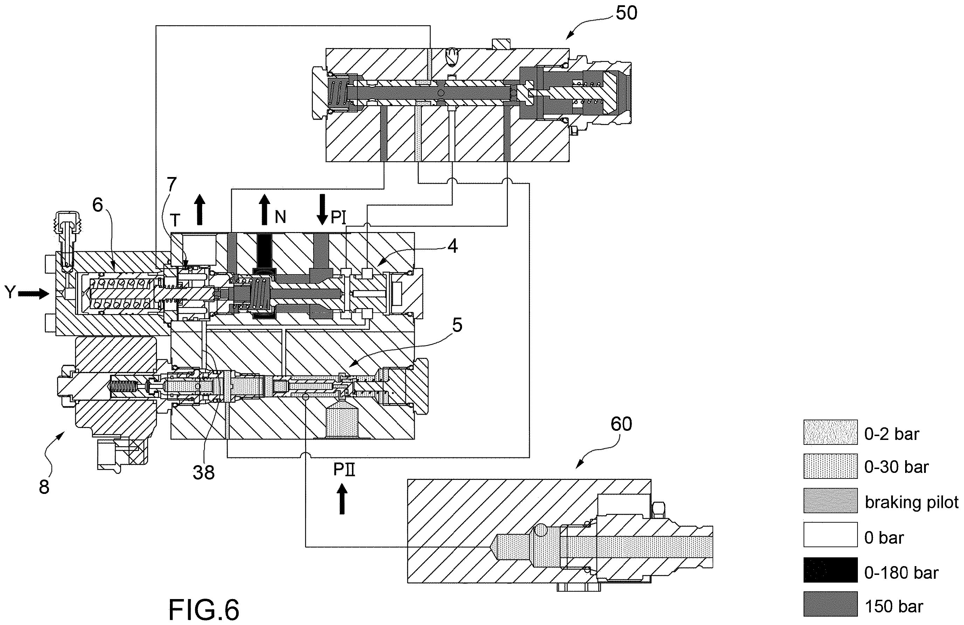

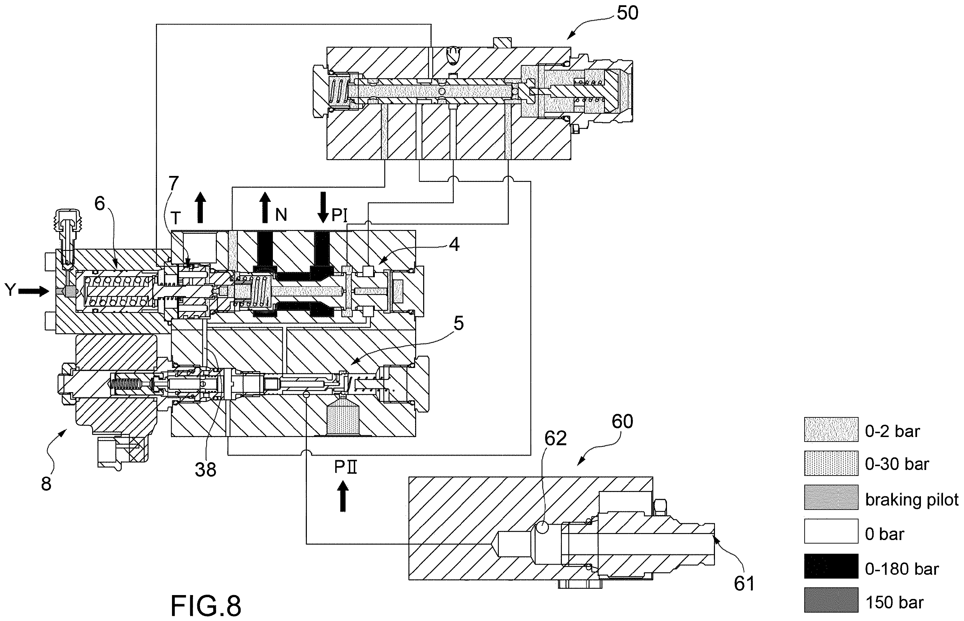

As illustrated in Figures 6, 7 and 8, the distributor 1 may further comprise a main distribution valve 50 and an additional distribution valve 60. As illustrated in the figures, the main 50 and additional 60 distribution valves are of a known type and illustrated schematically. Advantageously, the main distribution valve 50 and the additional distribution valve 60 are of the quick coupling type and can be connected to a towed vehicle in a releasable manner. The main distribution valve 50 has a main outlet 51, which is adapted to send high-pressure oil from the main line LI to the towed vehicle. Similarly, the additional distribution valve 60 has an additional outlet 61, which is adapted to send low-pressure oil from the additional line LII to the towed vehicle. Advantageously, the additional distribution valve 60 comprises a pressure switch 62, which is adapted to detect the pressure of the oil that runs through said additional distribution valve 62.

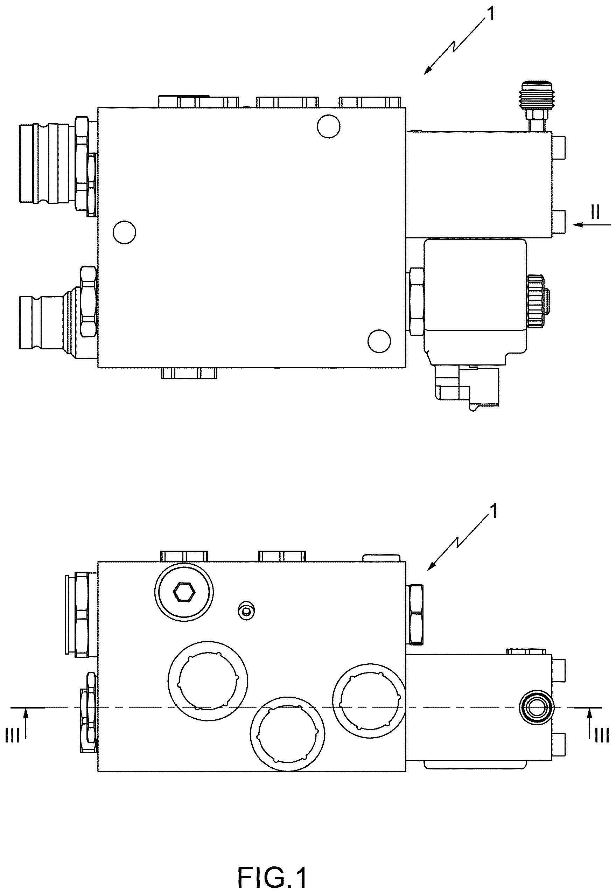

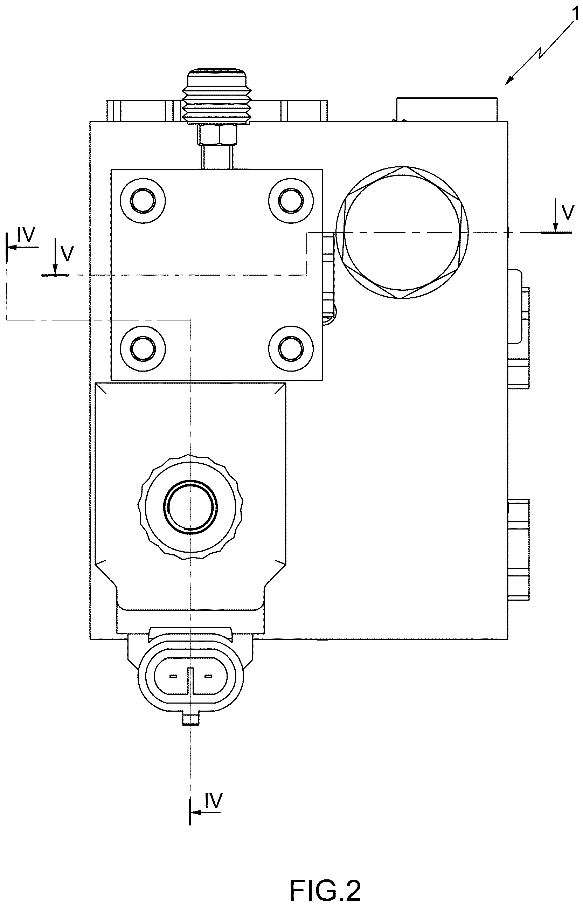

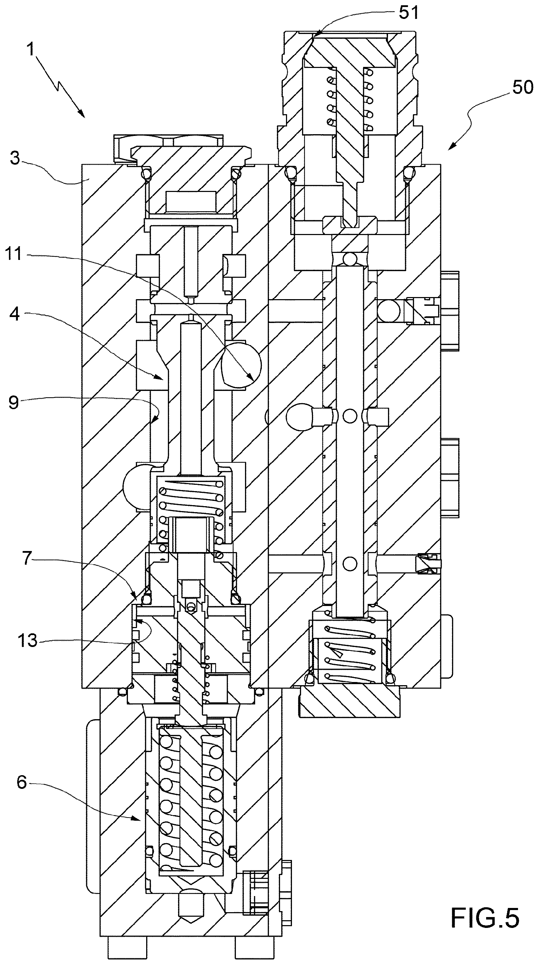

As illustrated in Figures 1 to 5, the main distribution valve 50 and the additional distribution valve 60 can be formed inside the body 3 of the distributor 1. Alternatively, the main distribution valve 50 and the additional distribution valve 60 can be formed in separate valve bodies fluidly connected, in a known, not shown manner, with the brake valve and the additional brake valve 5, respectively.

Figure 9 shows a diagram of a hydraulic system 2 of an agricultural or forestry vehicle, comprising a distributor 1 as illustrated in one of Figures 1 to 5.

Figure 10 shows a diagram of a hydraulic system 2' of an agricultural or forestry vehicle, comprising a distributor 1 according to the present invention, in which the main distribution valve 50 and the additional distribution valve 60 are formed in separate bodies. In the example shown in Figure 10, the system 2' may have, in this case, a connection with the towed vehicle through the main line LI on one side and the additional line LII on another side.

Figures 6, 7 and 8 schematically show the distributor 1 and a few components of the system 2 in three different respective operational configurations.

In Figures from 6 to 8 it can be seen that the different fields within the shown components correspond to different respective oil pressure ranges (indicated on the side in the respective captions).

In use, the main distribution valve 50 and the additional distribution valve 60 are coupled in a known manner to a towed vehicle so that high-pressure oil from the main line LI and low-pressure oil from the additional line LII, respectively, can be sent to said towed vehicle.

Figure 6 shows the system 2 during the braking process. In particular, an operator, by acting on the brake pedal of the tractor, activates, in a known manner, the main actuator 22 of the main drive 6. As illustrated in the figures, the main actuator 22 is of the hydraulic type and slides the brake piston 21 towards a braking position. Correspondingly, the brake piston 21 slides the main pilot spool 14 into the working position L. By sliding into the working position L, the main pilot spool 14 closes the draining outlet 15, consequently the pressure inside the main line LI increases due to the high-pressure oil supplied through the main delivery inlet 11 of the main delivery chamber. The main brake valve 4 moves, in a known manner, to a delivery position in which the high-pressure oil is sent through the main delivery outlet to the main delivery valve.

At the same time, along the additional line LII, the low-pressure oil enters the additional brake valve 5 and is sent, in a known manner, to the additional delivery valve 60.

It is noted that normally a towed vehicle comprises a parking braking system (of known type and not shown) which is configured to lock the wheels of the towed vehicle when it is not connected to an agricultural or forestry vehicle, i.e. it is not constantly supplied with oil under pressure. Generally, when a towed vehicle is connected (in a known, not shown manner) to a system 2 of an agricultural or forestry vehicle, the low-pressure oil in the additional line LII acts upon the parking braking system so as to unlock the wheels of the towed vehicle. In the event that the delivery of oil from the additional line LII to the towed vehicle is stopped, the parking braking system is activated in a known manner to brake the wheels of the towed vehicle.

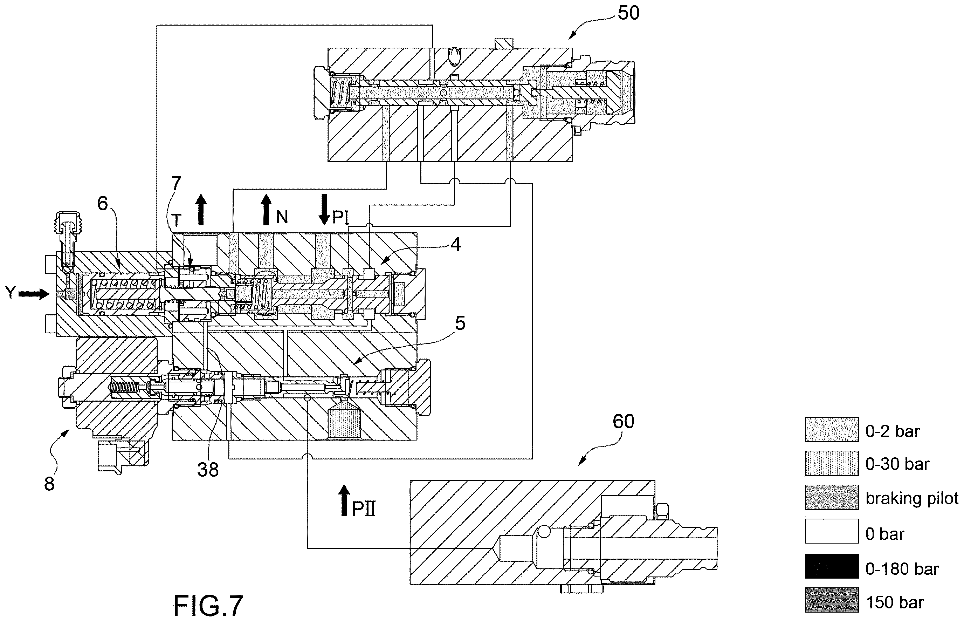

Figure 7 shows the system 2 in an operational configuration in which there is a failure along the main line LI. For example, a failure can be understood as an oil leakage or damage along the main line LI or inside the distributor 1 or in the main delivery PI (for instance, the breakage of the pump for the main delivery PI).

In the event of a failure as shown in Figure 7, at the time of braking (when the operator acts upon the brake pedal) the brake piston 21, similarly to what has been illustrated above, slides the main pilot spool 14. However, the pressure inside the main delivery chamber 9 does not increase (due to the failure along the main line LI) and the main pilot spool 14, as it is not subjected to the counteracting effect of the oil pressure in the main delivery chamber 9, continues to slide until it reaches the emergency position S. In the emergency position S, the main delivery chamber 9 is in communication with the outlet T through the inner cavity 23 of the main pilot spool 14. In addition, in the emergency position S, also the signal duct 38 is connected to the outlet T through the outlet duct 20 of the support 17, again through the main pilot spool 14; in this way, also the additional controlling chamber 37 is connected to the outlet T through the signal duct 38. Consequently, the additional pilot spool 36 moves back into a draining position in which the additional inlet 32 for the low-pressure oil is closed and the additional delivery chamber 30 is connected to the outlet T.

Therefore, the additional line LII no longer sends low-pressure oil to the towed vehicle and the parking braking system is automatically activated, in a known manner, to brake the wheels of the towed vehicle.

In the event of a breakdown of the braking system, for example of the brake pumps (of known type and not shown) for supplying high-pressure oil to the main line LI, the operator must operate the additional drive 8 (for example a handbrake). By actuating the additional drive 8, the additional delivery chamber 31 is put in communication with the outlet T through the additional pilot spool 36. This causes the additional delivery spool 33 to slide and the additional inlet 32 to close. Therefore, the supply of low-pressure oil to the towed vehicle along the additional line LII is stopped. Consequently, the emergency brakes are automatically operated (in a known, not shown manner) to brake the towed vehicle.

The distributor 1 and the system 2 of the type described above comprise a main line LI for sending high-pressure oil to the towed vehicle, and an additional line for sending low-pressure oil to the towed vehicle, which are independent of each other both from the supply point of view and from the control point of view.

The distributor 1 and the system 2 of the type described above, thanks to the connection by means of the signal line LS between the pilot valve 7 of the main delivery spool 10 and the additional drive 8 of the additional delivery spool 31, ensure an emergency automatic braking of the towed vehicle in case of failure along the main line LI.

Therefore, the distributor 1 and the system 2 of the type described above, in addition to complying with the requirements of the EU regulation 167/2013 relating to the braking of vehicles for the purpose of approval of agricultural and forestry vehicles, ensure a higher safety level of the tractor, as the emergency braking in case of failure along the main line LI occurs in an automated manner and is independent of the operator's skills.

Furthermore, the fact that the additional drive 8, in particular the additional actuator 35, is formed in a body separate from the body 3 of the distributor 1 and can be coupled in a releasable manner (in other words the additional actuator 35 is interchangeable) with the additional brake valve 5, allows the installation of an additional actuator 35 selected from a group of different actuators. For instance, the use of a proportional solenoid valve or a proportional mechanical valve ensures a modulation of the emergency braking.

## Claims

1. A hydraulic distributor for braking an agricultural or forestry vehicle comprising:
a first slide valve (7) having an oil draining outlet (15) and comprising a first, axially sliding spool (14);
a first drive (6), which is configured to axially vary the position of the first spool (14) of the first slide valve (7) and can be operated by an operator during the braking process;
a second slide valve (4), which has a first inlet (11) for a first delivery (PI) of high-pressure oil and a first control outlet (12) for sending, in use, high-pressure oil to a towed vehicle connected to the agricultural or forestry vehicle, the second slide valve (4) comprising a second, axially sliding spool (10), which can be operated by means of the first spool (14) of the first slide valve (7) ; **characterised by**
a third slide valve (5) comprising a third, axially sliding spool (31) and having a second inlet (32) for a second delivery (PII) of low-pressure oil and a second control outlet (33) for sending, in use, low-pressure oil to the towed vehicle connected to the agricultural or forestry vehicle;
a second drive (8), which is configured to vary the axial position of the third spool (31) of the third slide valve (5);
a signal line (LS), which connects said second drive (8) to said first slide valve (7).

2. The distributor according to claim 1, wherein said second drive (8) comprises an additional controlling chamber (37) and a fourth spool (36), which is axially sliding and is configured to axially move the third spool (31) of the third slide valve (5); wherein the signal line (LS) connects the first slide valve (7) to the additional controlling chamber (37) of the second drive (8); wherein the first slide valve (7) is configured to connect the signal line (LS) and said additional controlling chamber (37) to the draining outlet (15), when the output pressure of the first control outlet (12) of the second slide valve (4) is below a predetermined value.

3. The distributor according to claim 2, wherein, when the additional controlling chamber (37) is connected to the draining outlet (15), the second drive (8) is configured to position said fourth spool (36) in such a way that said third spool (31) closes the second inlet (32) for the second delivery (PII) of low-pressure oil and connects the second control outlet (33) to the draining outlet (15).

4. The distributor according to any of the preceding claims, wherein the first slide valve (7) comprises a working position (L), in which the first spool (14) positions the second spool (10) in a position which allows the first inlet (11) for the first delivery (PI) of high-pressure oil to be connected to the first control outlet (12); wherein the distributor (1) comprises elastic-return-resistant means (18), in particular a spring, which axially act upon the first spool (14) and are configured to hold, in use, the first spool (14) in the working position (L), when the resistant pressure of the oil flowing out of the first control outlet (12) exceeds a predetermined value.

5. The distributor according to any of the preceding claims, wherein said second drive (8) comprises an actuator (35), which can be operated by an operator and is configured to axially move said fourth spool (36).

6. The distributor according to claim 5, wherein, the second drive (8) is configured to position said fourth spool (36) so as to close the second inlet (32) for the second delivery (PII) of low-pressure oil and connect the second control outlet (33) to the draining outlet (15), when said actuator (35) is activated.

7. The distributor according to claim 5 or 6, wherein said actuator (35) can be coupled to the third slide valve (5) in a releasable manner.

8. The distributor according to claim 7, wherein said actuator (25) is a mechanically operated valve or a proportional solenoid valve or a proportional mechanical valve.

9. A hydraulic system for braking an agricultural or forestry vehicle comprising a hydraulic distributor (1) according to any of the preceding claims.

## Patentansprüche

1. Hydraulikverteiler zum Bremsen eines landwirtschaftlichen oder forstwirtschaftlichen Fahrzeugs, der umfasst:
ein erstes Schiebeventil (7), das einen Ölablassausgang (15) aufweist und einen ersten axial schiebbaren Schieber (14) umfasst;
einen ersten Antrieb (6), der derart ausgeführt ist, dass er die Position des ersten Schiebers (14) des ersten Schiebeventils (7) axial verändert und von einem Bediener während des Bremsvorgangs betätigt werden kann;
ein zweites Schiebeventil (4), das einen ersten Einlass (11) für ein erstes Zuführen (PI) von Hochdrucköl und einen ersten Steuerausgang (12) zum Leiten von Hochdrucköl bei Verwendung zu einem Anhängefahrzeug, das mit dem landwirtschaftlichen oder forstwirtschaftlichen Fahrzeug verbunden ist, aufweist, wobei das zweite Schiebeventil (4) einen zweiten axial schiebbaren Schieber (10) umfasst, der mittels des ersten Schiebers (14) des ersten Schiebeventils (7) betätigt werden kann;
**gekennzeichnet durch**
ein drittes Schiebeventil (5), das einen dritten axial schiebbaren Schieber (31) umfasst und einen zweiten Einlass (32) für ein zweites Zuführen (PII) von Niederdrucköl und einen zweiten Steuerausgang (33) zum Leiten von Niederdrucköl bei Verwendung zu dem Anhängefahrzeug, das mit dem landwirtschaftlichen oder forstwirtschaftlichen Fahrzeug verbunden ist, aufweist;
einen zweiten Antrieb (8), der derart ausgeführt ist, dass er die axiale Position des dritten Schiebers (31) des dritten Schiebeventils (5) verändert;
eine Signalleitung (LS), die den zweiten Antrieb (8) mit dem ersten Schiebeventil (7) verbindet.

2. Verteiler nach Anspruch 1, bei dem der zweite Antrieb (8) eine zusätzliche Steuerungskammer (37) und einen vierten Schieber (36) umfasst, der axial schiebbar ist und derart ausgeführt ist, dass er den dritten Schieber (31) des dritten Schiebeventils (5) axial bewegt; wobei die Signalleitung (LS) das erste Schiebeventil (7) mit der zusätzlichen Steuerungskammer (37) des zweiten Antriebs (8) verbindet; wobei das erste Schiebeventil (7) derart ausgeführt ist, dass es die Signalleitung (LS) und die zusätzliche Steuerungskammer (37) mit dem Ablassausgang (15) verbindet, wenn der Ausgangsdruck des ersten Steuerausgangs (12) des zweiten Schiebeventils (4) einen vorbestimmten Wert unterschreitet.

3. Verteiler nach Anspruch 2, bei dem dann, wenn die zusätzliche Steuerungskammer (37) mit dem Ablassausgang (15) verbunden ist, der zweite Antrieb (8) derart ausgeführt ist, dass er den vierten Schieber (36) derart positioniert, dass der dritte Schieber (31) den zweiten Einlass (32) für das zweite Zuführen (PII) von Niederdrucköl verschließt und den zweiten Steuerausgang (33) mit dem Ablassauslass (15) verbindet.

4. Verteiler nach einem der vorhergehenden Ansprüche, bei dem das erste Schiebeventil (7) eine Arbeitsposition (L) umfasst, in der der erste Schieber (14) den zweiten Schieber (10) in einer Position positioniert, die ermöglicht, dass der erste Einlass (11) für das erste Zuführen (PI) von Hochdrucköl mit dem ersten Steuerausgang (12) verbunden wird; wobei der Verteiler (1) elastische rückströmresistente Einrichtungen (18), insbesondere eine Feder, umfasst, die axial auf den ersten Schieber (14) wirken und derart ausgeführt sind, dass sie bei Verwendung den ersten Schieber (14) in der Arbeitsposition (L) halten, wenn der Widerstandsdruck des Öls, das aus dem ersten Steuerausgang (12) strömt, einen vorbestimmten Wert übersteigt.

5. Verteiler nach einem der vorhergehenden Ansprüche, bei dem der zweite Antrieb (8) einen Aktuator (35) umfasst, der von einem Bediener betätigt werden kann und derart ausgeführt ist, dass er den vierten Schieber (36) axial bewegt.

6. Verteiler nach Anspruch 5, bei dem der zweite Antrieb (8) derart ausgeführt ist, dass er den vierten Schieber (36) derart positioniert, dass dieser den zweiten Einlass (32) für das zweite Zuführen (PII) von Niederdrucköl verschließt und den zweiten Steuerausgang (33) mit dem Ablassausgang (15) verbindet, wenn der Aktuator (35) aktiviert ist.

7. Verteiler nach Anspruch 5 oder 6, bei dem der Aktuator (35) lösbar mit dem dritten Schiebeventil (5) gekoppelt sein kann.

8. Verteiler nach Anspruch 7, bei dem der Aktuator (35) ein mechanisch betätigtes Ventil oder ein Proportional-Magnetventil oder ein mechanisches Proportionalventil ist.

9. Hydrauliksystem zum Bremsen eines landwirtschaftlichen oder forstwirtschaftlichen Fahrzeugs, das einen Hydraulikverteiler (1) nach einem der vorhergehenden Ansprüche umfasst.

## Revendications

1. Distributeur hydraulique pour freiner un véhicule agricole ou forestier, comprenant :
une première valve coulissante (7) ayant une sortie de vidange d'huile et comportant une première bobine coulissant axialement (14) ;
un premier entraînement (6), qui est configuré pour varier axialement la position de la première bobine (14) de la première valve coulissante (7) et pouvant être actionné par l'opérateur pendant le procédé de freinage ;
une seconde valve coulissante (4), qui comporte une première entrée (11) pour une première fourniture (PI) d'huile sous haute pression et une première sortie de contrôle (12) pour envoyer, en utilisation, de l'huile sous haute pression à un véhicule remorqué, couplé au véhicule agricole ou forestier, la seconde valve coulissante (4) comportant une seconde bobine coulissant axialement (10) qui peut être actionné par des moyens de la première bobine (14) de la première valve coulissante (7) ;
**caractérisé en ce que**
une troisième valve coulissante (5) comportant une troisième bobine coulissant axialement (31) et ayant un une seconde entrée (32) pour une seconde fourniture (PII) d'huile sous basse pression et une seconde sortie de contrôle (33) pour envoyer, en utilisation, de l'huile sous basse pression vers le véhicule remorqué, couplé au véhicule agricole ou forestier ;
un second entraînement (8), qui est configuré pour varier la position axiale de la troisième bobine (31) de la troisième valve coulissante (5) ;
une ligne de signal (LS), qui connecte ledit second entraînement (8) avec ladite première valve coulissante (7).

2. Distributeur selon la revendication 1, dans lequel ledit second entraînement (8) comporte une chambre additionnelle de contrôle (37) et une quatrième bobine (36), qui coulisse axialement et est configurée pour déplacer axialement la troisième bobine (31) de la troisième valve coulissante (5); dans lequel la ligne de signal (LS) connecte la première valve coulissante (7) vers la chambre additionnelle de contrôle (37) du second entraînement (8); dans lequel la première valve coulissante (7) est configurée pour connecter la ligne de signal (LS) et ladite chambre additionnelle de contrôle (37) à la sortie d'évacuation (15), lorsque la pression de sortie de la première sortie de contrôle (12) de la seconde valve coulissante (4) est inférieure à une valeur prédéterminée.

3. Distributeur selon la revendication 2, dans lequel, lorsque la chambre additionnelle de contrôle (37) est connectée à la sortie d'évacuation (15), le second entraînement (8) est configuré pour positionner ladite quatrième bobine (36) de telle manière que ladite troisième bobine (31) ferme la deuxième entrée (32) pour la seconde fourniture d'huile (PII) d'huile à basse pression et connecte la seconde sortie de contrôle (33) à la sortie d'évacuation (15).

4. Distributeur selon l'une quelconque des revendications précédentes, dans lequel la première valve coulissante (7) comprend une position de travail (L), dans laquelle la première bobine (14) positionne la seconde bobine (10) dans une position qui permet à la première entrée (11) pour la première fourniture (PI) d'huile à haute pression d'être connectée à la première sortie de contrôle (12) ; dans lequel le distributeur (1) comprend des moyens de résistance de retour élastiques (18), en particulier un ressort, qui agit axialement sur la première bobine (14) et qui sont configurés pour maintenir, en utilisation, la première bobine (14) dans la position de travail (L), lorsque la pression de résistance de l'huile circulant à travers la première sortie de contrôle (12) dépasse une valeur prédéterminée.

5. Distributeur selon l'une quelconque des revendications précédentes, dans lequel ledit second entraînement (8) comprend un actionneur (35), qui peut être actionné par un opérateur et qui est configuré pour déplacer axialement ladite quatrième bobine (36).

6. Distributeur selon la revendication 5, dans lequel, le second entraînement (8) est configuré pour positionner ladite quatrième bobine (36) de manière à fermer la seconde entrée (32) pour la seconde fourniture d'huile (PII) à basse pression et connecter la seconde sortie de contrôle (33) à la sortie d'évacuation (15), lorsque ledit actuateur (35) est activé.

7. Distributeur selon la revendication 5 ou 6, dans lequel ledit actuateur (35) peut être couplé à la troisième valve coulissante (5) d'une manière libérable.

8. Distributeur selon la revendication 7, dans lequel ledit actuateur (35) est une valve actionnable mécaniquement ou une électrovalve proportionnelle ou une valve mécanique proportionnelle.

9. Système hydraulique pour freiner un véhicule agricole ou forestier comprenant un distributeur hydraulique (1) selon l'une quelconque des revendications précédentes.
